# EUROPEAN PATENT APPLICATION

(11) **EP 4 751 567 A1**
(43) Date of publication of application: **03.06.2026**
(21) Application number: 24786124.8
(22) Date of filing: 22.07.2024
(51) Int. Cl.: A01M 29/32, H02S 40/00

(54) **DEVICE TO PREVENT BIRDS FROM SETTLING ON PHOTOVOLTAIC PANELS**

(30) Priority: 25.07.2023 ES 202331379 U
(71) Applicant: Prosolar Birds, S.L., 08008 Barcelona (ES)
(72) Inventor: CALVERAS FUGAROLAS, Claudio, 08008 Barcelona (ES)
(74) Representative: Ungria López, Javier
(86) International application number: PCT/ES2024/070471
(87) International publication number: WO 2025/022036

(57) **Abstract**

The present invention relates to a device that has been specially designed to prevent birds from settling on photovoltaic panels. The object of the invention is therefore to achieve maximum energy efficiency of solar photovoltaic panels by eliminating birds perching on them.

## Description

### TECHNICAL FIELD

The present invention relates to a device that has been specially designed to prevent birds from settling on photovoltaic panels.

The object of the invention is therefore to achieve maximum energy efficiency of solar photovoltaic panels by eliminating birds perching on them and, therefore, the buildup of excrement from said birds on particular sections of the photovoltaic panels.

### BACKGROUND OF THE INVENTION

As is known, in the scope of practical application of the invention, the buildup of bird droppings on photovoltaic panels, particularly in certain sections of said photovoltaic panels, causes, at the very least, a significant reduction in their efficiency, such that prolonged exposure of the panels to excrements of this type can seriously harm their useful life as well as cause serious damage to said photovoltaic panels and their operation, rendering them useless over time.

The applicant is unaware of the existence of equipment such as the one that will be described below, and that effectively prevents birds from settling on said photovoltaic panels and, therefore, the buildup of excrement from said birds on them, particularly in certain sections of the surface of said photovoltaic panels.

### DESCRIPTION OF THE INVENTION

The device that is recommended solves the aforementioned problems in a completely satisfactory manner, based on a simple but highly effective solution.

A first aspect of the invention relates to a device to prevent birds from settling on photovoltaic panels, characterised in that it is made up of a driving shaft that ends at the top in a rotor on which a pair of telescopic rods are disposed in diametrical opposition which end at their free end in separate deflectors or sails, with an anti-symmetrical disposition, with the particularity that the driving shaft includes clamp-like fixing means at the bottom for fixing on the supporting structure or frame of the solar panels.

In a particular embodiment, the clamp-like fixing means are made of a pair of plates that can be moved along the shaft by means of washers and nuts **threaded** on said shaft.

In particular, the device to prevent birds from settling on photovoltaic panels comprises:
- a driving shaft, which in turn comprises:
   ∘ a central part that extends longitudinally according to a longitudinal direction between a first end and a second end,
   ∘ lubricating means located at the first end and at the second end of the central part of the driving shaft,
   ∘ an internal sphere located at the first end of the central part of the driving shaft,
- a rotor, coupled on the internal sphere and on the self-lubricating means of the first end of the central part of the driving shaft,
- two telescopic rods, wherein each telescopic rod is coupled to the rotor and extends according to a direction perpendicular to the longitudinal direction in which the central part of the driving shaft extends, wherein the two telescopic rods are located diametrically opposite one another,
- deflector means, each located on the end of a telescopic rod opposite the end of said telescopic rod closest to the rotor, the deflector means being disposed in an anti-symmetrical configuration,

wherein the device further comprises a mount, located at the second end of the central part of the driving shaft,
wherein said mount is configured to fix in a clamping manner the driving shaft to a supporting frame of the solar panels.

To this end, and more specifically, the device of the invention is constituted from a rotary driving shaft that will adopt a disposition perpendicular to the surface formed by the photovoltaic solar panels.

In particular, the rotary driving shaft comprises a central part, which extends longitudinally between a first end and a second end.

Additionally, the rotary driving shaft comprises lubricating means at its first end and at its second end. On the other hand, the lubricating means located at the first end of the rotary driving shaft comprise an internal sphere, preferably made of metal.

Advantageously, the lubricating means allow the central part of the rotary driving shaft to be lubricated, and in turn are configured to couple said rotary driving shaft with other elements, such as a mount to fix said rotary driving shaft and, therefore, the device that is the object of the present invention to an external element, or to couple other elements, such as those referred to below, to said rotary driving shaft.

In a particular embodiment, the lubricating means are self-lubricating bearings and/or self-lubricating rings.

In a particular embodiment, the first end of the rotary driving shaft comprises a self-lubricating bearing and/or the second end of the rotary driving shaft comprises two self-lubricating bearings.

In a particular embodiment, the central part of the rotary driving shaft and/or the internal sphere are made of stainless steel, while the lubricating means are made of bronze.

On the other hand, the device comprises a rotor, configured by means of a disc-shaped piece. Said disc-shaped piece is integral with the first end of the driving shaft, in particular with the lubricating means and the internal sphere located at said first end of the driving shaft.

In a particular embodiment, the rotor is made of resin with UV treatment.

The device in turn comprises, on the rotor or disc-shaped piece, two telescopic rods disposed in a diametrically opposite position, said two telescopic rods extending longitudinally in a perpendicular manner with respect to the driving shaft, in particular with respect to the central part of the driving shaft, and in opposite directions with respect to one another, adapting to installations having panels of different sizes.

The telescopic rods are fixed to the rotor by means of mechanical couplings, said couplings being, in a particular embodiment, screwed couplings.

In a particular embodiment, each of the telescopic rods is configured by means of a first tubular element, and a second tubular element housed in the first tubular element, the telescopic rod being therefore configured to regulate its length by means of the position of the second tubular element with respect to the first tubular element.

In a particular embodiment, the telescopic rods are configured by means of aluminium.

The device also comprises deflector means, or sails, the end of the aforementioned telescopic rods ending with separate pieces in the form of a sail or anti-symmetrical deflectors that allow the device to rotate randomly and naturally when it senses the slightest breeze. That is, the end of each telescopic rod opposite the end closest to the central part of the rotary driving shaft comprises deflector means in the form of a sail, said deflector means being configured to rotate around the longitudinal direction along which the driving shaft extends.

In a particular embodiment, at least some deflector means are coupled to the corresponding telescopic rod by means of a piece configured according to a dovetail and/or by means of a screwed coupling.

In a particular embodiment, the deflectors or sails are made of polyamide with UV treatment.

The device also comprises, at its second end or lower part, a mount, made up of a type of adjustable clamp, which advantageously allows the device to be fixed to a frame of any structure supporting photovoltaic solar panels, regardless of the thickness of said frame. That is, the present mount is configured to, advantageously, allow the coupling and fixing of the position of the driving shaft, and therefore of the present device, to an external structure, in particular, to a frame that is part of said external structure.

In a particular embodiment, the mount comprises:
- a threaded rod,
- a rectangular plate,
- a plate, and
- at least one nut,

wherein the rod extends according to the longitudinal direction of the driving shaft and comprises a first end and a second end, said rod being coupled by means of their first end to the second end of the central part of the driving shaft,
wherein the rectangular plate, the plate and the nuts are coupled to the second end of the rod,
wherein the rectangular plate and the plate are fixed to the first end of the rod by means of a corresponding nut, and wherein the rectangular plate is also fixed to the frame,
such that the plate is configured to move along the threaded rod such that it regulates the position of the telescopic rods and the deflector means with respect to the longitudinal direction in which the driving shaft extends.

In particular, the mount comprises a rod which extends longitudinally according to a first end and a second end, the rod being configured to be fixed to the second end of the driving shaft by means of the first end of said rod. In a particular embodiment, said rod is a threaded rod.

Additionally, the mount comprises a rectangular piece fixed to the second end of the rod, a plate fixed to said rectangular piece in a position adjacent to the second end of said rod, and at least one nut coupled to the rod and located adjacent to said plate, such that the rectangular piece is the element of the mount furthest away from the second end of the rod.

In this way, the rectangular piece is configured to be coupled to a frame of an external structure, in particular an external structure that configures an installation of photovoltaic panels.

The mount is configured to couple the driving shaft, as well as the telescopic rods and the deflector means, by means of said driving shaft, to the frame of the external structure, thus allowing said telescopic rods and the deflector means to rotate around the longitudinal direction in which the central part of said driving shaft extends through the internal sphere and the lubricating means.

Advantageously, the configuration of each telescopic rod and its position fixed to the driving shaft and this, in turn, to the frame of the external structure through the mount, allows the length of each telescopic rod to be adjusted, reducing its buckling and, therefore, preventing the rotation of said telescopic rods from being reduced, slowed down or stopped.

In a particular embodiment, the deflector means are configured to rotate 180° around the longitudinal direction in which the central part of said driving shaft extends, thus covering a space on the photovoltaic panels of the corresponding installation that is optimal for preventing birds from perching on said photovoltaic panels.

Advantageously, this mount is configured to adapt to any frame of any external structure, thus configuring one of the so-called universal mounts.

In a particular embodiment, the device comprises positioning means, configured to allow the pitching of the assembly formed by the driving shaft, the telescopic rods and the deflector means with respect to the supporting frame.

Advantageously, the positioning means allow said assembly to be positioned with respect to the outer structure on which the device is coupled, such that the movement of the deflector means is not hindered by said outer structure.

That is, the positioning means allow the pitching of the deflector means with respect to the outer structure such that they can make a complete movement, thus covering the surface of the photovoltaic panel on which the device is located.

In a particular embodiment, the positioning means are located between the mount and the central part of the driving shaft, in a position adjacent to the lubricating means.

In a particular embodiment, the positioning means comprise:
- a first element comprising toothed profiles,
- a second element comprising toothed profiles,
wherein the first element and the second element are coupled to one another by means of the coupling of the corresponding toothed profiles.

Therefore, the positioning means are configured by means of coupling a first element and a second element of the same configuration, said configuration of both the first element and the second element being toothed profiles, such that the coupling between the first element and the second element occurs through the interaction between their teeth, which mesh with one another, thus keeping the position in which they are located fixed.

In a particular embodiment, the first element is coupled to the central part of the driving shaft, while the second element is coupled to the rod of the mount.

In a particular embodiment, the positioning means further comprise coupling means, preferably threaded coupling means, configured to couple said positioning means.

In a particular embodiment, the coupling of the first element to the central part of the driving shaft and/or the coupling of the second element and the rod of the mount is performed by means of a threaded coupling.

In a particular embodiment, the positioning means further comprise blocking means, preferably pins housed in holes, configured to block the position of said positioning means.

That is, in a particular embodiment, the first element and/or the second element comprise blocking means, configured to maintain the position of said first element with respect to said second element. In a particular embodiment, said blocking means are configured as a pin, housed in a hole of the first element or the second element, blocking the movement of said corresponding element.

A simple but highly effective, economical, easy-to-install device that can be adapted to installations having solar panels of different sizes, present in photovoltaic panel installations, is thereby achieved.

### BRIEF DESCRIPTION OF THE DRAWINGS

To complete the description that will be provided herein, and for the purpose of helping to make the features of the invention more readily understandable, according to a preferred practical exemplary embodiment thereof, said description is accompanied by a set of drawings constituting an integral part thereof in which, by way of illustration and not limitation, the following is represented:
Figure 1 shows a perspective view of a first embodiment of the device to prevent birds from settling on photovoltaic panels made according to the object of the present invention.
Figure 2 shows an enlarged detail of the device of Figure 1 at the level of its fixing means for fixing same to the structure supporting the panels.
Figure 3A shows a detailed diagram of the configuration of the device in Figures 1 and 2.
Figure 3B shows a detailed diagram of the configuration of a second embodiment of the device.
Figure 4 shows a perspective view of an embodiment of the positioning means of the device of Figure 3B.

### PREFERRED EMBODIMENT OF THE INVENTION

In view of the mentioned figures, it can be seen how the device of the invention is constituted from a driving shaft (1), which is configured by means of a central part (1.1) in the form of a stainless steel rod (1.1), which extends longitudinally according to a first end (1.1.1) and a second end (1.1.2), along a longitudinal direction, in particular the vertical direction according to the orientation of Figures 1 to 3A.

The device in turn comprises lubricating means (1.2), in particular self-lubricating bearings (1.2), located at the first end (1.1.1) and second end (1.1.2) of the central part (1.1) of the driving shaft (1). Likewise, the device also comprises an internal metallic sphere (1.3), particularly steel, located at the first end (1.1.1) of the central part (1.1) of the driving shaft (1).

As shown in Figure 3A, the first end (1.1.1) of the central part (1.1) of the driving shaft (1) is the upper end according to the orientation of said Figure 3, and comprises a self-lubricating bearing (1.2), while the second end (1.1.2) is the lower end according to the orientation of said Figure 3A, and comprises two self-lubricating bearings (1.2). In the same way, the driving shaft (1) extends longitudinally according to the vertical direction shown according to the orientation of said Figure 3A.

The first end (1.1.1) of the central part (1.1) of the driving shaft (1) ends at the top in a rotor (2) coupled on the internal sphere (1.3) and on the self-lubricating bearing (1.2). That is, the rotor (2) is assembled on a linkage which, in the chosen exemplary embodiment, is made up of an internal metallic sphere (1.3) and two self-lubricating rings (1.2), with the rotor (2) being configured based on resin with UV treatment, and which includes two diametrically opposite holes in which telescopic rods (3), in particular two telescopic rods (3), are fixed by means of a screwed coupling, wherein each telescopic rod (3) allows its length to be regulated, as well as greater structural rigidity and buckling strength to be offered, allowing it to adapt to installations of different dimensions. Each telescopic rod (3) extends in a direction perpendicular to the longitudinal direction in which the driving shaft (1) extends, that is, it extends in the horizontal direction according to the orientation of the figures, and is configured based on aluminium.

These telescopic rods (3) end at their free end in respective deflector means (4) or sails (4), having an anti-symmetrical disposition, in order to generate a rotary motion of the rotor (2), preferably being made from lightweight materials, such as polyamides, and including a UV treatment that maximises their useful life against wear due to solar radiation.

These sails (4) are attached, in the present exemplary embodiment shown in Figures 1 - 3A, by means of a screwed coupling(not shown), in particular by means of a thread at the free end of each of the corresponding telescopic rods (3), including stops determining their final assembly position.

In particular, each telescopic rod (3) is coupled, by means of one of its ends, to the rotor (2), while a sail (4) is coupled to its opposite end, according to the longitudinal direction along which it extends.

At the bottom, that is, at the second end (1.1.2) of the rod (1.1) configuring the driving shaft (1), a mount (S) is coupled on the two self-lubricating bearings (1.2), configured as a clamp-like mechanism to allow it to be fixed to a frame (8) of an external structure, said frame (8) being a frame for holding the photovoltaic solar panels present in a photovoltaic installation.

The mount (S) comprises a threaded rod (S.1) which extends along the longitudinal direction of the driving shaft (1) and comprises a first end and a second end. Likewise, the mount (S) also includes a rectangular piece (5), or rectangular plate (5), a plate (6) and nuts (7).

As shown in Figure 3A, the threaded rod (S.1) is coupled by means of its first end to the second end (1.1.2) of the central part (1.1) of the driving shaft (1). Likewise, the rectangular plate (5), the plate (6) and the nuts (7) are coupled to the second end of the threaded rod (S.1).

More specifically, the second end of the threaded rod (S.1) of the mount (S) comprises a rectangular plate (5) that is fixed to said first end of the threaded rod (S.1) of the mount (S) by means of a nut (7), having an elongated and narrow configuration that allows its passage through the frame (8) present in the space defined between two solar panels, as shown in Figure 2, such that once it is inserted in that space, the driving shaft (1) rotates 90° so that the rectangular plate (5) is disposed transversely to said frame (8), preventing it from coming out.

Above this element, i.e. the rectangular plate (5), a vertically movable plate (6) is established, and it is adjusted by means of a nut (7), as well as by means of washers, not represented in the figures, such that the tightening of the nut (7) causes the plate (6) to move along the threaded rod (S.1), until the assembly comprising the driving shaft (1), the telescopic rods (3) and the sails (4) is perfectly stabilised.

That is, the device is configured to regulate its height according to the vertical direction of Figures 1 - 3A by means of the adjustable clamp configured by the mount (S), which allows the telescopic rods (3) and the sails (4) to be positioned in a position along the threaded rod (S.1), in addition to being coupled by means of said mount (S) to a fixed position of the frame (8) of the external structure and, moreover, it is configured to regulate its extension according to the horizontal direction through the regulation of the length of each telescopic rod (3), thus covering more or less area of the external structure according to a longer or shorter length of the telescopic rod (3), respectively.

Once the device is implemented, due to the lightweight materials from which it is made and the configuration of its rotor (2) and elements associated with same, the slightest breeze will cause an angular displacement of the deflectors (4) or sails (4) and consequently the telescopic rods (3), generating a deterrent movement that prevents birds from landing on the solar panels, keeping them clean and thus extending their useful life.

Moreover, Figure 4 shows positioning means (9) configured by means of a first element (9.1) and a second element (9.2), which are coupled to one another through their corresponding toothed profiles (9.3) or teeth (9.3), in particular distributed according to a toothed circumference.

As can be seen, the first element (9.1) comprises a threaded connection (9.4), configured to couple said first element (9.1) to the central part (1.1) of the driving shaft (1). Even though Figure 4 does not show it, the second element (9.2) comprises an analogous threaded connection (9.4).

Likewise, the first element (9.1) and second element (9.2) also comprise blocking means (9.5), in particular a hole housing a pin (not shown) that allows the position of said first element (9.1) and second element (9.2) to be fixed with respect to one another.

Finally, Figure 3B shows the device of Figures 1, 2 and 3A, further comprising the positioning means (9) shown in Figure 4.

As can be seen, the positioning means (9) are located between the driving shaft (1), in particular in a position adjacent to the self-lubricating bearings (1.2) located on the central part (1.1), and the mount (S), in particular on the rod (S.1) of said mount (S).

Said positioning means (9) allow the pitching, as seen in Figure 3B, of the assembly of the driving shaft (1), telescopic rods (3) and sails (4), such that said elements do not collide with the frame (8) of the outer structure, which advantageously allows the present device to adapt to any type of photovoltaic installations, regulating the position of said device according to the dimensions and orientations of each photovoltaic installation.

### CLAUSES

Clause 1: A device to prevent birds from settling on photovoltaic panels, characterised in that it is made up of a rod functioning as a shaft (1) that ends at the top in a rotor (2) on which a pair of telescopic rods (3) are disposed in diametrical opposition which end at their free end in separate deflectors (4) or sails, with an anti-symmetrical disposition, with the particularity that the rod functioning as a shaft (1) includes clamp-like fixing means at the bottom for fixing on the supporting structure or frame of the solar panels.

Clause 2: The device to prevent birds from settling on photovoltaic panels according to clause 1, wherein the clamp-like fixing means are made up of a pair of plates that can be moved along the shaft (1) by means of washers and nuts threaded on said shaft.

Clause 3: The device to prevent birds from settling on photovoltaic panels according to clause 1, wherein the rotor is made of resin with UV treatment.

Clause 4: The device to prevent birds from settling on photovoltaic panels according to clause 1, wherein the telescopic rods (3) are made of aluminium.

Clause 5: The device to prevent birds from settling on photovoltaic panels according to clause 1, wherein the deflectors (4) or sails are made of polyamide with UV treatment.

## Claims

1. **A device** to prevent birds from settling on photovoltaic panels, **characterised in that** it is made up of a driving shaft (1) that ends at the top in a rotor (2) on which a pair of telescopic rods (3) are disposed in diametrical opposition which end at their free end in separate deflectors (4) or sails, with an anti-symmetrical disposition, with the particularity that the driving shaft (1) includes clamp-like fixing means at the bottom for fixing on the supporting structure or frame of the solar panels.

2. The device to prevent birds from settling on photovoltaic panels according to claim 1, wherein the clamp-like fixing means are made up of a pair of plates that can be moved along the shaft (1) by means of washers and nuts threaded on said shaft.

3. The device to prevent birds from settling on photovoltaic panels according to claim 1, **characterised in that** it comprises:
- a driving shaft (1), which in turn comprises:
∘ a central part (1.1) that extends longitudinally according to a longitudinal direction between a first end (1.1.1) and a second end (1.1.2),
∘ lubricating means (1.2) located at the first end (1.1.1) and at the second end (1.1.2) of the central part (1.1) of the driving shaft (1),
∘ an internal sphere (1.3) located at the first end (1.1.1) of the central part (1.1) of the driving shaft (1),
- a rotor (2), coupled on the internal sphere (1.3) and on the self-lubricating means (1.2) of the first end (1.1.1) of the central part (1.1) of the driving shaft (1),
- two telescopic rods (3), wherein each telescopic rod (3) is coupled to the rotor (2) and extends according to a direction perpendicular to the longitudinal direction in which the central part (1.1) of the driving shaft (1) extends, wherein the two telescopic rods (3) are located diametrically opposite one another,
- deflector means (4), each located on the end of a telescopic rod (3) opposite the end of said telescopic rod (3) closest to the rotor (2), the deflector means (4) being disposed in an anti-symmetrical configuration,
wherein the device further comprises a mount (S), located at the second end (1.1.2) of the central part (1.1) of the driving shaft (1),
wherein said mount (S) is configured to fix in a clamping manner the driving shaft (1) to a supporting frame (8) of the solar panels.

4. The device to prevent birds from settling on photovoltaic panels according to claim 3, **characterised in that** the mount (S) comprises:
- a threaded rod (S.1),
- a rectangular plate (5),
- a plate (6), and
- at least one nut (7),
wherein the rod (S.1) extends according to the longitudinal direction of the driving shaft (1) and comprises a first end and a second end, said rod (S.1) being coupled by means of their first end to the second end (1.1.2) of the central part (1.1) of the driving shaft (1),
wherein the rectangular plate (5), the plate (6) and the nuts (7) are coupled to the second end of the rod (S.1),
wherein the rectangular plate (5) and the plate (6) are fixed to the first end of the rod (S.1) by means of a corresponding nut (7), and wherein the rectangular plate (5) is also fixed to the frame (8),
such that the plate (6) is configured to move along the threaded rod (S.1) such that it regulates the position of the telescopic rods (3) and the deflector means (4) with respect to the longitudinal direction on which the driving shaft (1) extends.

5. The device to prevent birds from settling on photovoltaic panels according to any of the previous claims, wherein the rotor (2) is made of resin with UV treatment.

6. The device to prevent birds from settling on photovoltaic panels according to any of the previous claims, wherein the telescopic rods (3) are made of aluminium.

7. The device to prevent birds from settling on photovoltaic panels according to any of the previous claims, wherein the deflectors (4) or sails are made of polyamide with UV treatment.

8. The device to prevent birds from settling on photovoltaic panels according to any of the preceding claims, further comprising positioning means (9) configured to allow the pitching of the driving shaft (1) with respect to the supporting frame (8).

9. The device to prevent birds from settling on photovoltaic panels according to claim 8 when it depends on any of claims 3 to 7, wherein the positioning means (9) are located between the driving shaft (1) and the mount (S).

10. The device to prevent birds from settling on photovoltaic panels according to any of claims 8 to 9, wherein the positioning means (9) comprise:
- a first element (9.1) comprising toothed profiles (9.3),
- a second element (9.2) comprising toothed profiles (9.3),
wherein the first element (9.1) and the second element (9.2) are coupled to one another by means of the coupling of the corresponding toothed profiles (9.3).

11. The device to prevent birds from settling on photovoltaic panels according to claim 10, wherein the first element (9.1) is coupled to the driving shaft (1) and the second element (9.2) is coupled to the rod (S.1) of the mount (S).

12. The device to prevent birds from settling on photovoltaic panels according to any of claims 8 to **11,** wherein the positioning means (9) further comprise coupling means (9.4), preferably threaded coupling means (9.4), configured to couple said positioning means (9).

13. The device to prevent birds from settling on photovoltaic panels according to any of claims 8 to 12, wherein the positioning means (9) further comprise blocking means (9.5), preferably pins housed in holes (9.5), configured to block the position of said positioning means (9).
